# EUROPÄISCHE PATENTSCHRIFT

(11) **EP 0 401 410 B1**
(45) Veröffentlichungstag und Bekanntmachung des Hinweises auf die Patenterteilung: **29.12.1993**
(21) Anmeldenummer: 89110405.1
(22) Anmeldetag: 08.06.1989
(51) Int. Cl.: H02H 9/04, H02H 9/02

(54) **Schaltungsanordnung zum Schutz elektronischer Schaltungen vor Überspannung**
Circuit arrangement for protecting electronic circuits against overvoltages
Circuit de protection de circuits électroniques contre les surtensions

(43) Veröffentlichungstag der Anmeldung: 12.12.1990
(73) Patentinhaber: SIEMENS AKTIENGESELLSCHAFT, 80333 München (DE)
(72) Erfinder: Larik, Joost, Dipl.-Ing., D-8500 Nürnberg (DE); Förder, Walter, Dipl.-Phys., D-8510 Fürth (DE)

(56) Entgegenhaltungen:
- DE-A- 1 538 376
- DE-A- 2 460 422
- US-A- 3 769 561

## Beschreibung

Die Erfindung betrifft eine Schaltungsanordnung zum Schutz elektronischer Schaltungen vor Überspannung nach dem Oberbegriff des Patentanspruches 1.

Elektronische Schaltungen, insbesondere integrierte Schaltkreise, sind beispielsweise beim Betrieb an Automobilbordnetzen häufig der Gefahr einer Zerstörung durch an den Versorgungsleitungen anliegenden Uberspannungen ausgesetzt. Den elektronischen Schaltungen werden deshalb spannungsbegrenzende Anordnungen vorgeschaltet. Eine derartige Anordnung ist beispielsweise aus Robert C. Dobkin, IC Zener Eases Reference Design, National Semiconductor Application Note 173, November 1976, bekannt. Eine auf Masse GND bezogene Versorgungsspannungsquelle mit der Spannung U1 wird über einen Widerstand R1 auf den Kollektor eines emitterseitig an Masse GND liegenden bipolaren Transistors T1 geführt, dessen Basis zum einen mit dem Emitter und über eine Zenerdiode Z mit dem Kollektor verbunden ist. Eine Spannung U2 zur Versorgung der zu schützenden Schaltung S liegt zwischen Masse GND und Kollektor des Transistors T1 an. Außerdem ist zwischen Emitter und Kollektor des Transistors T1 eine (parasitäre) Diode D1 geschaltet. Diese bekannte Schaltungsanordnung ist in FIG 1a der Zeichnung dargestellt.

Durch die Zenerdiode Z, den Transistor T1 und den Widerstand R1 wird die Spannung U2 zur Versorgung der zu schützenden Schaltung auf einen Wert begrenzt, der sich in etwa aus der über der Zenerdiode Z abfallenden Spannung ergibt. Zur Strombegrenzung dient der Widerstand R2. Im Arbeitsbereich der zu schützenden Schaltung, d.h. im gezeigten Fall, daß die Spannung U1 positiv und kleiner als die Zenerspannung ist, darf die Schutzschaltung die Stromaufnahme der zu schützen den Schaltung S nicht beeinträchtigen. Daraus folgt, daß der Widerstand R2 entsprechend klein gewählt werden muß. Außerhalb des Arbeitsbereiches, d.h. in diesem Fall daß die Spannung U1 negativ oder größer als die Zenerspannung ist, sollten Strom und Spannung so begrenzt werden, daß die Bauelemente der zu schützenden Schaltung S noch innerhalb ihres zulässigen Arbeitsbereiches betrieben werden, da es ansonsten eine Zerstörung der zu schützenden Schaltung S zur Folge hätte.

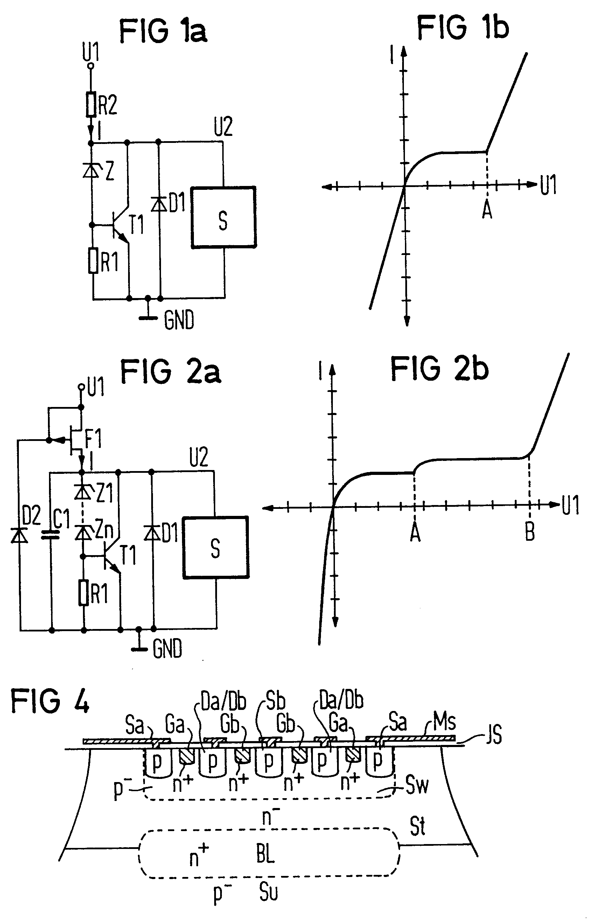

FIG 1b der Zeichnung zeigt den Verlauf des Stromes I der Schaltungsanordnung abhängig von der Spannung U1. Bei positiver Spannung U1 steigt die Stromaufnahme zunächst nur allmählich an, bis die Spannung U1 etwa gleich der Zenerspannung ist (Punkt A), nimmt jedoch bei einem weiteren Ansteigen der Spannung U1 stark zu. Dies gilt auch für den Bereich der Verpolung, in diesem Fall also bei negativer Spannung U1. Nachteil der bekannten Schaltungsanordnung ist dabei, daß bei den zuletzt genannten beiden Fällen die Verlustleistung stark ansteigt und damit eine Zerstörung der Schaltungsanordnung selbst zur Folge haben kann.

Aufgabe der Erfindung ist es daher, eine Schaltungsanordnung der gattungsgemäßen Art mit einer verbesserten Leistungsbegrenzung anzugeben.

Diese Aufgabe wird bei einer gattungsgemäßen Schaltungsanordnung durch die kennzeichnen den Merkmale des Patentanspruches 1 gelöst. Ausgestaltungen und Weiterbildungen des Erfindungsgedankens sind in Unteransprüchen gekennzeichnet.

Vorteile der Erfindung sind ein geringerer schaltungstechnischer Aufwand, eine hohe Integrierbarkeit und eine sich über einen größeren Bereich der Eingangangsspannung erstreckende Strombegrenzung.

Die Erfindung wird nachfolgend anhand von den in den FIG der Zeichnung dargestellten Ausführungsbeispielen näher erläutert, wobei gleiche Elemente mit gleichen Bezugszeichen versehen sind.

Es zeigt:
- FIG 1a: eine bekannte Schaltungsanordnung,
- FIG 1b: die Strom-Spannungsabhängigkeit der Schaltungsanordnung nach FIG 1a,
- FIG 2a: eine erste Ausführungsform einer erfindungsgemäßen Schaltungsanordnung,
- FIG 2b: die Strom-Spannungsabhängigkeit der Schaltungsanordnung nach FIG 2a,
- FIG 3a: eine zweite Ausführungsform einer erfindungsgemäßen Schaltungsanordnung mit gesplittetem Feldeffekttransistor,
- FIG 3b: die Strom-Spannungsabhängigkeit der Schaltungsanordnung nach FIG 3a,
- FIG 4: ein Ausführungsbeispiel eines gesplitteten Feldeffekttransistors und eines MOS-Feldeffekttransistors.

Die bekannte Schaltungsanordnung nach FIG 1a ist erfindungsgemäß dahingehend abgeändert, daß der Vorwiderstand R2 durch einen Sperrschicht-Feldeffekttransistor F1 - im gezeigten Ausführungsbeispiel durch einen p-Kanal-Sperrschicht-Feldeffekttransistor - ersetzt wird. Darüber hinaus ist die Anordnung nach FIG 2a ebenso wie die nachfolgenden in die zu schützende Schaltung mitintegriert. Der Feldeffekttransistor F1 wird durch Verbinden von Source- und Gate-Anschluß als Stromquelle betrieben. An dem Source-Anschluß liegt dabei die positive Spannung U1 und an dem Drain-Anschluß die positive Spannung U2 an. Der Drain-Anschluß des Feldeffekttransistors F1 ist zudem über eine parasitäre Diode D2 in Sperrichtung mit Masse GND verbunden. Es handelt sich bei der Diode D2 um die parasitäre Substratdiode des Feldeffekttransistors F1. Weiterhin ist gegenüber FIG 1a das Ausführungsbeispiel nach FIG 2a um einen Kondensator C1 erweitert, der zwischen dem Drain-Anschluß des Feldeffekttransistors F1 und Masse GND liegt. Der Kondensator C1 bildet zusammen mit dem Bahnwiderstand der Drain-Source-Strecke des Feldeffekttransistors F1 einen Tiefpaß zur Unterdrückung von hochfrequenten Störimpulsen. Darüber hinaus ist die Zenerdiode Z aus FIG 1a durch eine Reihenschaltung mehrerer Zenerdioden Z1...Zn ersetzt.

Durch das Vorschalten des Feldeffekttransistors F1 anstelle des Widerstandes R2 wird erreicht, daß für Spannungen, die größer sind als die Spannung im Punkt A, der Strom I zunächst etwas ansteigt und dann auf diesen Wert eingeprägt bleibt bis zu einem Punkt B, der die Durchbruchspannung des Feldeffekttransistors F1 charakterisiert. Ist die Spannung U1 größer als die Spannung im Punkt B, so steigt der Strom I stark an und es ist keine Stromeinprägung mehr gegeben.

Für den Fall, daß die Spannung U1 negativ ist, also bei Verpolung, fließt der Strom I über die in Durchlaßrichtung gepolte Diode D2 gegen Masse GND ab. Auch hierbei tritt keine Stromeinprägung auf.

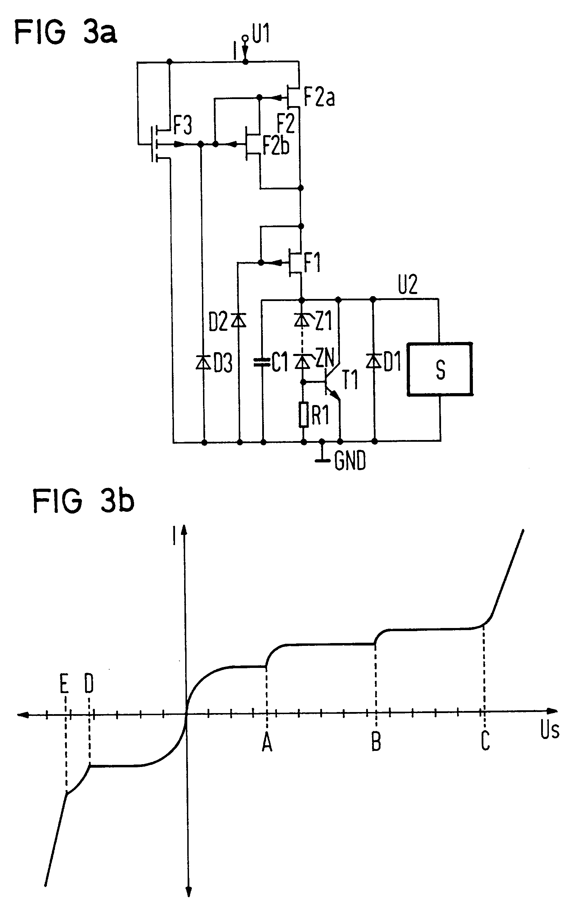

Bei der in FIG 3a dargestellten Ausführungsform ist die Schaltungsanordnung nach FIG 2a um zwei Sperrschicht-Feldeffekttransistoren F2a,F2b vom p-Kanal-Typ und um einen MOS-Feldeffekttransistor F3 vom n-Kanal-Typ erweitert. Eine Diode D3 ergibt sich aus der parasitären Substratdiode des Feldeffekttransistors F2. Die beiden Feldeffekttransistoren F2a,F2b sind als gesplitteter Feldeffekttransistor F2 ausgeführt, wobei die beiden Feldeffekttransistoren F2a,F2b im folgenden als Teiltransistoren bezeichnet werden. Die Drain-Anschlüsse und die Gate-Anschlüsse beider Teiltransistoren F2a,F2b sind dabei jeweils zusammengeführt. Darüber hinaus ist der Source-Anschluß des einen Teiltransistors F2b mit dem Gate-Anschluß des anderen Teiltransistors F2a verbunden, dessen Source-Anschluß wiederum mit der Spannung U1 beaufschlagt ist. Die zusammengeführten Drain-Anschlüsse der beiden Teiltransistoren F2a,F2b sind mit dem Source- bzw. Gate-Anschluß des Feldeffekttransistors F1 verbunden. Die gekoppelten Gate-Anschlüsse der beiden Teiltransistoren F2a und F2b, die ebenfalls beide vom p-Kanal-Typ sind, sind zum einen über eine Diode D3 in Sperrichtung gegen Masse GND geschaltet und zum anderen mit dem Substrat-Anschluß des MOS-Feldeffekttransistors F3 verbunden, dessen Drain-Anschluß an Masse GND liegt und dessen Gate- und Source-Anschluß mit der Spannung U1 beaufschlagt ist.

Für positive Werte der Spannung U1 ist der MOS-Feldeffekttransistor F3 nicht wirksam. Dagegen ist die Gate-Source-Strecke des Teiltransistors F2a leitend. Die Teiltransistoren F2a und F2b können dabei als parallelgeschaltet betrachtet werden. Für diejenigen Werte der Spannung U1, die kleiner sind als die Spannung im Punkt B aus FIG 2b, ist die Funktionsweise der gesamten Schaltungsanordnung im wesentlichen gleich der Anordnung aus FIG 2a. Durch die Reihenschaltung der Feldeffekttransistoren F1 und F2 wird nun aber eine höhere Durchbruchspannung erreicht, die in FIG 3b mit dem Punkt C gekennzeichnet ist. Der Strom I erhöht sich damit ausgehend von Punkt B zunächst geringfügig und bleibt dann bis zum Punkt C begrenzt. Durch Hinzuschalten weiterer Feldeffekttransistoren kann die Durchbruchspannung insgesamt noch vergrößert werden. Bei der Integration der Schaltungsanordnung ist jedoch zu beachten, daß die weiteren Feldeffekttransistoren ebenso wie der gesplittete Feldeffekttransistor F2 und der Feldeffekttransistor F1 elektrisch isoliert ist, d.h. in getrennten Wannen aufgebaut werden. Die an der jeweiligen Wanne auftretende Spannung gegenüber Masse GND ist gleich der jeweiligen Gate-Spannung. Die bei der Integration zwangsläufig vorhandenen parasitären Substratdioden D1,D2 und D3 sind bei positiver Spannung U1 gesperrt und bestimmen die maximal erreichbare Durchbruchspannung. In FIG 3b stellt also somit Punkt C die Durchbruchspannung der Diode D2 dar. Für negative Werte der Spannung U1 werden die parasitären Dioden D1,D2 und D3 leitend. Die Spannung U2 wird damit gleich der Flußspannung über der Diode D1. Der Teiltransistor F2b und der Feldeffekttransistor F1 sind dabei nicht mehr wirksam. Durch die Aufteilung des Feldeffekttransistors F2 in die Teiltransistoren F2a und F2b ist jedoch der Teiltransistor F2a verpolbar. Bei diesem vertauschen nun Source und Drain ihre Funktionen und der Teiltransistor F2a begrenzt den Strom wie ein einzelner Feldeffekttransistor. Hierdurch wird vorteilhafterweise eine statische Verpolbarkeit der Schaltungsanordnung erreicht.

Bei einem bestimmten negativen Wert der Spannung U1 wird auch der MOS-Feldeffekttransistor F3 leitend, dessen Schwellenspannung kleiner oder gleich der Gate-Source-Durchbruchspannung des Teiltransistor F2a ist. Wird nun die Spannung U1 negativer als die Schwellenspannung, so wird ein Teil des Stromes I über den MOS-Feldeffekttransistor F3 geführt, wodurch vorteilhafterweise ein zusätzlicher Schutz vor negativen Überspannungen, insbesondere Spannungsspitzen, gewährleistet wird. In FIG 3b der Zeichnung entspricht die Schwellenspannung dem Punkt D. Ausgehend vom Nullpunkt von Strom I und Spannung U1 steigt der Strom zunächst in negativer Richtung an, bis er auf einen bestimmten Wert begrenzt bleibt. Im Punkt D nimmt dann der Strom proportional zur Spannung U1 bis zu einem Punkt E zu, bei dem der Anstieg dann steiler wird. Der Punkt E charakterisiert die Spannung, die trotz der Wirkung des MOS-Feldeffekttransistors F3 zu einem Durchbruch des Teiltransistors F2a führt.

Eine bevorzugte Ausführungsform des MOS-Feldeffekttransistors F3 und des in die Teiltransistoren F2a und F2b aufgeteilten Feldeffekttransistors F2 ist in FIG 4 dargestellt.

Eine bevorzugte Ausführungsform des gesplitteten Feldeffekttransistors F2 in integrierter Schaltungstechnik zeigt FIG 4. Uber der Substratschicht Sa vom p⁻-Leitungstyp ist eine Schicht St vorgesehen, wobei zwischen beiden Schichten Su und St eine Buried-Layer-Schicht BL vom n⁺-Leitungstyp eingebettet ist. In die Schicht St wiederum ist eine Wanne Sw vom p⁻-Leitungstyp eingebracht, in der sich (im gezeigten Ausführungsbeispiel) ihrerseits eine zentral angeordnete Struktur Sb und zwei dazu konzentrische ringähnliche und streifenförmige Strukturen Sa, Da/Db vom p-Leitungstyp sowie dazwischenliegend zwei ebenfalls ringähnliche streifenförmige Strukturen Ga,Gb vom n⁺-Leitungstyp befinden. An der Oberfläche ist eine Isolationsschicht Is aufgebracht, bei der Aussparungen an den Stellen vorgesehen sind, an denen sich darunter die Strukturen Sa,Da/Db,Sb befinden. Entsprechend den Aussparungen der Isolationsschicht Is ist darauf eine ebenfalls ringförmige Metallisierungsschicht Ms angeordnet, die dem Verlauf der Strukturen Sa,Da/Db,Sb entsprechen, die in den Aussparungen der Isolationsschicht Is bis an die jeweiligen Strukturen heranreicht und deren äußerster Ring der Metallisierungsschicht Ms sich bis an dem Rand der gesamten Anordnung erstreckt.

Prinzipiell handelt es sich bei der Anordnung nach FIG 4 um zwei parallelgeschaltete Feldeffekttransistoren. Dabei liegt der Source-Anschluß des Teiltransistors F2a als Struktur Sa außen. Durch Überlappung der Metallisierung der Struktur Sa mit der Isolationsschicht Is in Verbindung mit der Schicht St wird ein MOS-Feldeffekttransistor gebildet, der vorteilhafterweise als MOS-Feldeffekttransistor F3 bei der erfindungsgemäßen Schaltungsanordnung vorgesehen ist. Weiterhin sind die ringförmigen Gate-Anschlüsse der Teiltransistoren F2a und F2b, gegeben durch die Strukturen Ga,Gb und beispielsweise in Emitterdiffusion ausgeführt, miteinander und mit der Schicht St sowie der Buried-Layer Schicht BL verbunden. Dabei grenzen die Strukturen Ga und Gb an die als Kanal wirkende Schicht St von der als Drain-Anschluß der beiden Teiltransistoren F2a und F2b wirkenden Struktur Da/Db ab (Channel-Stopper). Die Strukturen Sa,Sb,Da/Db sind beispielsweise in Basisdiffusion ausgeführt. Durch Verändern der Lage der Strukturen Ga und Gb zueinander bei gegebener Lage der Strukturen Sa,Sb,Da/Db läßt sich der Verlauf des Stromes I abhängig von der Spannung U1, insbesondere im Bereich von Punkt E, beeinflussen.

Vorteile der in FIG 4 dargestellten Anordnung sind der geringe Platzbedarf, die Abschirmungseigenschaften der Metallisierungsschicht und die Anpassung von Durchbruchspannung des Feldeffekttransistors F2 und Schwellenspannung des MOS-Feldeffekttransistors F2.

Abschließend sei darauf hingewiesen, daß statt der bekannten Anordnung mit Zenerdiode Z, Transistor T1 und Widerstand R1 auch eine Zenerdiode allein verwendet werden kann.

## Patentansprüche

1. Schaltungsanordnung zum Schutz elektronischer Schaltungen (S) vor Uberspannung einer Versorgungsspannungsquelle mit einer spannungsbegrenzenden Anordnung (R1,T1,Z), beispielsweise einer Zenerdiode, **dadurch gekennzeichnet,**
daß ein erster Sperrschicht-Feldeffekttransistor (F1), bei dem Gate- und Sourceanschluß zusammengeführt sind, der spannungsbegrenzenden Anordnung (Rs,T1,Z) vorgeschaltet ist.

2. Schaltungsanordnung nach Anspruch 1, **dadurch gekennzeichnet,** daß
der erste Sperrschicht-Feldeffekttransistor (F1) in einen ersten und zweiten Teiltransistor (F2a,F2b) vom gleichen Leitungstyp aufgeteilt ist, wobei Gate- und Sourceanschluß des zweiten (F2b) mit dem Gateanschluß des ersten Teiltransistors (F2a) und die Drainanschlüsse beider miteinander verbunden sind.

3. Schaltungsanordnung nach Anspruch 1 oder 2, **dadurch gekennzeichnet,** daß mehrere Sperrschicht-Feldeffekttransistoren (F1,F2) in Reihe geschaltet sind.

4. Schaltungsanordnung nach Anspruch 1, 2 oder 3, **gekennzeichnet,** durch einen MOS-Feldeffekttransistor (F3), bei dem der Sourceanschluß an Masse (GND) liegt und bei dem Gate- und Drainanschluß an der Versorgungsspannungsquelle angeschlossen sind.

5. Schaltungsanordnung nach Anspruch 4, **dadurch gekennzeichnet,** daß erster und zweiter Teiltransistor (F2a,F2b) sowie der MOS-Feldeffekttransistor (F3) derart integriert sind, daß in eine Halbleiterschicht (St) des einen Leitungstyps (n⁻) eine Wanne (Sw) des anderen Leitungstyps (p⁻) eingebaut ist, daß sich in dieser Wanne (Sw) wiederum eine zentral angeordnete Struktur (Sb) und zwei streifenförmige Strukturen (Sa,Da/Db) des gleichen Leitungstyps (p), jedoch mit stärkerer Dotierung befinden,
daß zwischen diesen streifenförmigen Strukturen (Sa,Da/Db) und der zentral angeordneten Struktur (Sb) jeweils eine streifenförmige Struktur (Ga,Gb) des einen Leitungstyps (n⁺) mit stärkerer Dotierung vorgesehen ist,
daß eine Isolationsschicht (Is) an der Oberfläche angebracht ist, die Aussparungen an den Stellen aufweist, an denen sich darunter die streifenförmigen Strukturen (Sa,Da/Db,Sb) des anderen Leitungstyps (p) befinden und
daß auf der Isolationsschicht (Is) eine Metallisierungsschicht (Ms) angeordnet ist, die dem Verlauf der streifenförmigen Strukturen (Sa,Da/Db,Sb) entspricht, die in den Aussparungen der Isolationsschicht (Is) bis an die jeweiligen Strukturen reicht und deren äußerster Ring über die Wanne (Sw) hinaus sich bis über die Halbleiterschicht (St) erstreckt.

6. Schaltungsanordnung nach Anspruch 5, **dadurch gekennzeichnet,** daß die Schaltungsanordnung in die zu schützende Schaltung (S) mitintegriert ist.

## Claims

1. Circuit arrangement for protecting electronic circuits (S) against overvoltage of a supply voltage source with a voltage-limiting arrangement (R1,T1,Z), for example a Zener diode, characterized in that a first junction field-effect transistor (F1), in which gate and source terminal are combined, is connected in series with the voltage-limiting arrangement (Rs,T1,Z).

2. Circuit arrangement according to Claim 1, characterized in that the first junction field-effect transistor (F1) is divided into a first and second part-transistor (F2a,F2b) of the same type of conduction, gate and source terminal of the second (F2b) being connected to the gate terminal of the first part-transistor (F2a) and the drain terminals of both being connected to one another.

3. Circuit arrangement according to Claim 1 or 2, characterized in that a number of junction field-effect transistors (F1,F2) are connected in series.

4. Circuit arrangement according to Claim 1, 2 or 3, characterized by a MOS field-effect transistor (F3) in which the source terminal is connected to ground (GND) and in which gate and drain terminal are connected at the supply voltage source.

5. Circuit arrangement according to Claim 4, characterized in that first and second part-transistor (F2a,F2b) and the MOS field-effect transistor (F3) are, integrated in such a manner that in one semiconductor layer (St) of the one type of conduction (n⁻), a well (Sw) of the other type of conduction (p⁻) is incorporated, in that in this well (Sw), in turn, a centrally arranged structure (Sb) and two strip-shaped structures (Sa,Da/Db) of the same type of conduction (p) but with greater doping are located, in that between these two strip-shaped structures (Sa,Da/Db) and the centrally arranged structure (Sb), a strip-shaped structure (Ga,Gb) of the one type of conduction (n⁺) with greater doping is in each case provided, in that an insulation layer (Is) is applied to the surface which has recesses at points at which, underneath, the strip-shaped structures (Sa,Da/Db,Sb) of the other type of conduction (p) are located, and
in that on the insulation layer (Is), a layer of metallization (Ms) is arranged which matches the course of the strip-shaped structures (Sa,Da/Db,Sb), which extends to the respective structures in the recesses in the insulation layer (Is), and the outermost ring of which extends past the well (Sw) over the semiconductor layer (St).

6. Circuit arrangement according to Claim 5, characterized in that the circuit arrangement is also integrated into the circuit (S) to be protected.

## Revendications

1. Montage pour la protection de circuits électroniques (S) contre la surtension d'une source de tension d'alimentation, à dispositif (R1,T1,Z) de limitation en tension, par exemple à diode Zener, caractérisé en ce que un premier transistor à effet de champ à couche de blocage (F1), dans lequel sont regroupées les bornes de grille et de source, est branché en amont du dispositif (R1,T1,Z) de limitation en tension.

2. Montage suivant la revendication 1, caractérisé en ce que
le premier transistor à effet de champ à couche de blocage (F1) est subdivisé en un premier et en un deuxième transistor partiel (F2a, F2b) de même type de conduction, les bornes de grille et de source du deuxième (F2b) transistor partiel étant reliées à la borne de grille du premier transistor partiel (F2a) et les bornes de drain des deux transistors partiels étant reliées entre elles.

3. Montage suivant la revendication 1 ou 2, caractérisé en ce que plusieurs transistors à effet de champ à couche de blocage (F1,F2) sont montés en série.

4. Montage suivant la revendication 1, 2 ou 3, caractérisé par un transistor à effet de champ-MOS (F3), dont la borne de source est à la masse (GND) et dont les bornes de grille et de drain sont reliées à la source de tension d'alimentation.

5. Montage suivant la revendication 4, caractérisé en ce
que le premier et le deuxième transistor partiel (F2a, F2b) ainsi que le transistor à effet de champ-MOS (F3) sont intégrés de telle manière que, dans une couche semiconductrice (St) du premier type de conductivité (n⁻), est formée une cuvette (Sw) de l'autre type de conductivité (p⁻),
que dans cette cuvette (Sw) se trouve une structure (Sb) en position centrale, et deux structures en forme de bande (Sa, Da/Db) de même type de conductivité (p), mais à un dopage plus fort,
qu'entre ces structures en forme de bande (Sa, Da/Db) et la structure en position centrale (Sb), il est prévu une structure en forme de bande (GA, GB) du premier type de conductivité (n⁺), ayant un dopage plus fort,
qu'une couche isolante (Is) est déposée sur la surface, et présente des évidements aux emplacements en-dessous desquels se trouvent les structures en forme de bandes (Sa, Da/Db, Sb) de l'autre type de conductivité (p) et
que sur la couche isolante (Is) est disposée une couche de métallisation (Ms) qui correspond à l'allure des structures en forme de bandes (Sa, Da/Db, Sb) qui s'étend, dans les évidements de la couche isolante (Is), jusqu'aux structures respectives, et dont les bords extérieurs s'étendent, au-delà de la cuvette (Sw) et jusqu'au-delà de la couche semiconductrice (St).

6. Montage suivant la revendication 5, caractérisé en ce qu'il est intégré dans le circuit (S) à protéger.
